# EUROPEAN PATENT APPLICATION

(11) **EP 3 035 263 A1**
(43) Date of publication of application: **22.06.2016**
(21) Application number: 15200436.2
(22) Date of filing: 16.12.2015
(51) Int. Cl.: G06Q 10/10

(54) **PROPERTY CONTROL PROGRAM, PROPERTY CONTROL METHOD, PROCESSING APPARATUS AND SYSTEM FOR CREATING COMMON FILE**

(30) Priority: 17.12.2014 JP 2014254889
(71) Applicant: Konica Minolta, Inc., Tokyo 100-7015 (JP)
(72) Inventor: Tsubotani, Ikuko, Tokyo, 100-7015 (JP); Takeuchi, Kazuma, Tokyo, 100-7015 (JP); Ogino, Shinya, Tokyo, 100-7015 (JP); Takamura, Shunsuke, Tokyo, 100-7015 (JP); Hoshino, Noriko, Tokyo, 100-7015 (JP); Motoi, Toshihiro, Tokyo, 100-7015 (JP); Kawabuchi, Yoichi, Tokyo, 100-7015 (JP); Moriwaki, Kagumi, Tokyo, 100-7015 (JP)
(74) Representative: Henkel, Breuer & Partner

(57) **Abstract**

Provided are a property control program, property control method, processing apparatus and a common-file creating system. The processing apparatus is connected to plural terminals. On receiving local data from one of the terminals, a controller of the processing apparatus extracts properties of one or more objects from the local data, compares each property with a common property and determines whether to keep or change the each property. If the property is the same as the common property, the controller keeps the property as it is. Otherwise, the controller determines whether to keep the individual property which differs from the common property as it is or to change the individual property to the corresponding common property, in accordance with whether the individual property meets a predetermined criterion. Using the determined property, the controller writes each object of the local data into the common file, and stores the common file.

## Description

### TECHNICAL FIELD

The present invention relates to a property control program, property control method, system and processing apparatus which can create a common file. Particularly, the present invention relates to a program, method, system and processing apparatus, for controlling properties of objects when creating a common file by incorporating plural pieces of data into the common file.

### BACKGROUND

In some kind of group work such that plural users work together while pooling their ideas and then collect the ideas into a common fie, plural users who are working on their respective terminals may demand to create objects, such as text, shapes and images, with desired properties (for example, desired size, desired color, if it is a text object, desired font face, and others). Further, in the group work, some user can use a special property for a certain object which the user believes is particularly important, for example, by changing the size of the object, the color of the object, or if it is a text object, the font face of the object.

Such group work needs a process to put all the contents of users' work together (in other words, a process to create one file by collecting all the objects created by the users) in the end. In this process, if such file (referred to as a common file) is created by collecting objects so as to keep the properties of the objects which were respectively set by users on their terminals as they are, the created file may give users a sense of non-unity between the objects. In view of the background, there have been proposed various technologies to control the properties (property information) of objects.

### DESCRIPTION OF THE RELATED ART

For example, Japanese Unexamined Patent Publication (JP-A) No. 2006-350959 discloses an image processing apparatus which can combine plural documents into one document. The image processing apparatus includes a dividing section which cuts and divides each document to be combined, into document areas in accordance with predetermined categories; an extracting section which, for each of the categories, extracts common document areas which belong to the same category, from the document areas cut and divided by the dividing section; a property determining section which determines a property to be used for each category in the combined document, based on the properties of the extracted common document areas.

When creating a common file by incorporating plural objects into the file, users may modify the properties of the objects by users' hands, which can make users' work complicated and increase the users' burden. Alternatively, a common file may be created by automatically making the properties of all the objects in each category uniform as described in JP-A No. 2006-350959. However, in this technology, the created common file does not reflect users' intentions (users' opinions, minds and individual viewpoints) which were given to the properties of the created objects, and it can affect the meaning of the group work such that plural users share various ideas and collect them together.

### SUMMARY

Aspects of the present invention are directed to property control programs, property control methods, systems and processing apparatuses which can create a common file reflecting users' intentions on properties of objects in the file and gives users a sense of unity between the objects without needing users' additional and complicated work.

An illustrative property control program reflecting one aspect of the present invention is a property control program to be executed in a processing apparatus. The processing apparatus which is communicably connected by a communication network to a plurality of terminals each capable of creating local data including one or more objects. The processing apparatus is configured to create a common file which a plurality of pieces of local data created by the terminals are to be written into. The property control program, when being executed by a processor of the processing apparatus, causing the processing apparatus to perform the following processing. The processing comprises: in response to receiving local data from one of the terminals, extracting at least one property of one or more objects from the local data by analyzing the local data; comparing each property extracted from the local data with at least one common property previously set for use in the common file; and determining the each property. The determining the each property includes, on determining that one of the at least one property extracted from the local data is same as the at least one common property, keeping the property as it is, and otherwise on determining that one of the at least one property extracted from the local data is different from the at least one common property, defining the property as an individual property and determining whether to keep the individual property as it is or to change the individual property to the corresponding common property, in accordance with whether the individual property meets a predetermined criterion. The processing further comprises writing each of the one or more objects contained in the local data into the common file using a property according to a result of the determining the each property.

An illustrative property control method reflecting one aspect of the present invention is a property control method to be used in a processing apparatus which is communicably connected by a communication network to a plurality of terminals each capable of creating local data including one or more objects. The processing apparatus is configured to create a common file which a plurality of pieces of local data created by the terminals are to be written into. The property control method comprises: receiving local data from one of the terminals; in response to receiving the local data, extracting at least one property of one or more objects from the local data by analyzing the local data; comparing each property extracted from the local data with at least one common property previously set for use in the common file; and determining the each property. The determining the each property includes, on determining that one of the at least one property extracted from the local data is same as the at least one common property, keeping the property as it is, and otherwise on determining that one of the at least one property extracted from the local data is different from the at least one common property, defining the property as an individual property and determining whether to keep the individual property as it is or to change the individual property to the corresponding common property, in accordance with whether the individual property meets a predetermined criterion. The method further comprises writing each of the one or more objects contained in the local data into the common file using a property according to a result of the determining the each property.

An illustrative common-file creating system reflecting one aspect of the present invention is a common-file creating system comprising: a plurality of terminals each capable of creating local data; and a processing apparatus which is communicably connected by a communication network to the plurality of terminals. The processing apparatus includes a controller. The controller of the processing apparatus is configured to create a common file which a plurality of pieces of local data created by the terminals are to be written into. The controller of the processing apparatus is further configured to receive local data from one of the terminals; in response to receiving the local data from the one of the terminals, extract at least one property of one or more objects from the local data by analyzing the local data; compare each property extracted from the local data with at least one common property previously set for use in the common file; and determine the each property. The determination includes, on determining that one of the at least one property extracted from the local data is same as the at least one common property, keeping the property as it is, and otherwise on determining that one of the at least one property extracted from the local data is different from the at least one common property, defining the property as an individual property, and determining whether to keep the individual property as it is or to change the individual property to the corresponding common property, in accordance with whether the individual property meets a predetermined criterion. The controller of the processing apparatus is further configured to write each of the one or more objects contained in the local data into the common file using a property according to a result of the determining the each property; and send data of the common file to at least one of the terminals. The each of the plurality of terminals includes a display section including a screen on which the local data is displayed, and a controller. The controller of the terminal is configured to create local data including one or more objects to send the local data to the processing apparatus; and in response to receiving data of the common file from the processing apparatus, control the display section to display on the screen the one or more objects which have been written into the common file by the processing apparatus.

According to the illustrative property control program, property control method, common-file creating system and processing apparatus for creating a common file, the processing apparatus in the common-file creating system can create a common file which reflects users' intentions on properties of objects in the common file and gives users a sense of unity between the objects without needing users' additional and complicated work, for the following reasons.

The processing apparatus in the common-file creating system (when a property control program is executed by a processor of the processing apparatus) performs the following property control, on receiving local data sent from one of the terminals. The processor of the processing apparatus checks each property of one or more objects contained in the local data, and determines whether an individual property which differs from a common property or common properties exists in the local data, where the common property is a default property of the common file or a property previously set by a user for use in the common file. If one or more individual properties have been found, the processor of the processing apparatus determines whether to keep the one or more individual properties as they are or to change each individual property to the corresponding common property by using a predetermined criterion based on the mixing ratio, change history or frequency of use of the individual property. Then, the controller of the processing apparatus writes each object contained in the local data into the common file using a property according to a result of the above-described property determination.

Optionally, if the local data sent from one of the terminals includes layout information of each object, the controller of the processing apparatus obtains the position of each object, defined in accordance with the layout information under the assumption that the each object is written into the common file, and then determines whether each object can be written into the common file without overlapping with objects existing in the common file. If any object can overlap with another object which has already been written into the common file, the controller of the processing apparatus changes the layout information and writes the object into the common file so as not to overlap with other objects in the common file.

Other features of illustrative embodiments will be described below.

### BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention, and wherein:
FIG. 1 is a diagram illustrating an example of the structure of a common-file creating system of Example 1;
FIGs. 2A and 2B are block diagrams illustrating an example of the hardware structure of a terminal and the hardware structure of a processing apparatus of Example 1;
FIG. 3 is a block diagram illustrating an example of the functional structure of the processing apparatus of Example 1;
FIG. 4 is a flowchart illustrating an example of the whole operation of the processing apparatus of Example 1;
FIG. 5 is a flowchart illustrating an example of the operation (processing of determining and changing properties of local data) of the processing apparatus of Example 1;
FIG. 6 is a diagram for illustrating an example of a process of writing an object into a common file (on creating a common file) by using the processing apparatus of Example 1;
FIG. 7 is a diagram illustrating an example of the contents of local data shown in FIG. 6, which is written in XML;
FIG. 8 is a diagram illustrating an example of a process of writing an object into a common file (on editing the common file) by using the processing apparatus of Example 1;
FIG. 9 is a diagram illustrating an example of the contents of local data shown in FIG. 8, which is written in XML;
FIG. 10 is a diagram illustrating another example of a process of writing an object into a common file (on editing the common file) by using the processing apparatus of Example 1;
FIG. 11 is a diagram illustrating an example of the contents of local data shown in FIG. 10, which is written in XML;
FIG. 12 is a block diagram illustrating an example of the functional structure of the processing apparatus of Example 2;
FIG. 13 is a flowchart illustrating an example of the whole operation of the processing apparatus of Example 2;
FIGs. 14A to 14C are diagrams illustrating examples of a process of writing an object into a common file (on creating a common file) by using the processing apparatus of Example 2;
FIGs. 15A to 15C are diagrams illustrating examples of the process of writing an object into a common file (on editing a common file) by using the processing apparatus of Example 2; and
FIGs. 16A to 16C are diagrams illustrating examples of the process of writing an object into a common file (on editing a common file) by using the processing apparatus of Example 2.

### DESCRIPTION OF THE PREFERRED EMBODIMENTS

Hereinafter, an embodiment of the present invention will be described with reference to the drawings. However, the scope of the invention is not limited to the illustrated examples.

As described above, a kind of group work needs a process to collect objects created by plural users (operators) into a common file. In this process, if a common file is created so as to reflect the properties of the objects set by the users respectively on their terminals as they are, the created file may give users a sense of non-unity between the objects and it may endanger the value of the common file.

This problem may be solved by correcting the properties of objects in the common file by users' hands but it increases the users' burden. Alternatively, the problem may be solved by automatically making the properties in a common file uniform together at once, as disclosed in JP-A No. 2006-350959, but a common file created by this technique does not reflect users' intentions given to the properties of objects, which can endanger the meaning of the group work.

Objects in a common file can have common properties which were previously set for use in the common file and/or individual properties which are different from the common properties, where the common property is a default property of the common file or a property previously set by a user for use in the common file. The individual properties include properties reflecting users' intentions and properties not reflecting users' intentions. In group work such that plural users share their ideas and collect the ideas together, it is important that the users' intentions are clearly shown.

In view of that, an illustrative processing apparatus in a common-file creating system as an embodiment reflecting one aspect of the present invention, performs the following processing in place of making properties of all the objects uniform. The processing apparatus recognizes a user's intentions given to a property of each object in local data created by each user and determines whether to keep or change the property in accordance with whether the property meets a predetermined criterion. Then, the processing apparatus changes the property in accordance with a result of the determination so as to secure the uniformity of the properties of objects written into a common file.

In concrete terms, a controller of a processing apparatus which can create and manage a common file, receives data to be written into the common file (referred to as local data) from a terminal (hereinafter, referred to as a data receiving process), where the local data includes one or more objects. In response to receiving the local data, the controller of the processing apparatus extracts one or more properties of each object from the local data and compares each property extracted from the local data with at least one common property previously set for use in the common file. If a property which differs from the at least one common property is found, the controller of the processing apparatus defines the property as an individual property and calculates the mixing ratio of individual properties. If the mixing ratio exceeds a first threshold, since a sense of unity between objects in the common file can deteriorate, the controller of the processing apparatus changes the individual property to the corresponding common property and then writes one or more objects of the local data into the common file by using the changed property. If the mixing ratio does not exceed (is the same or less than) the first threshold, the processing apparatus checks a history of past changes of the individual property for each object (determines whether the individual property has ever been changed from the default property). If the individual property has not ever been changed, since the individual property can be considered as a non-special property, the controller of the processing apparatus changes the individual property to the corresponding common property and then writes one or more objects of the local data into the common file by using the changed property. If the individual property has ever been changed, the controller processing apparatus calculates a frequency of use of the individual property. If the frequency is less than a second threshold, the controller of the processing apparatus keeps the individual property as it is and writes one or more objects of the local data into the common file. If the frequency is not less than the second threshold, since the individual property can be considered as a non-special property, the controller of the processing apparatus changes the individual property to the corresponding common property and writes one or more objects of the local data into the common file by using the changed property. On determining to change the individual property, the controller of the processing apparatus may create a preview image of the local data with the individual property changed to the corresponding common property, and send data of the preview image to the terminal which sent the local data to the processing apparatus, so as to cause the user of the terminal to choose whether to change the individual property or not. The controller of the processing apparatus may change the individual property in accordance with a result of user's determination.

In the following description, a process to determining whether to keep or change an individual property which differs from a common property in accordance with whether the individual property meets a predetermined criterion is referred to as a process of determining a property.

As described above, the processing apparatus automatically performs the property control which includes determining to keep a property reflecting user's intentions as it is; determining to change a property which does not reflect user's intentions to a common property, if needed, after confirming the change of the property to a user; and writing each of one or more objects contained in local data into the common file using the property according to a result of the process of determining a property. With this control, the processing apparatus can create a common file which reflects users' intentions on the properties of objects and gives users a sense of unity between the objects in the common file, without needing users' additional and complicated work.

### EXAMPLES

### EXAMPLE 1

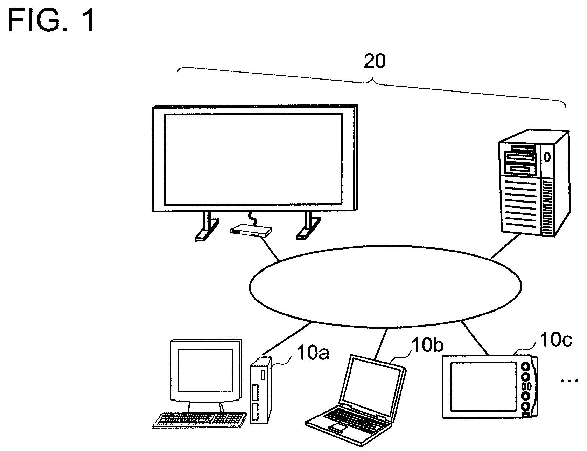

An illustrative a property control program, property control method, common-file creating system and processing apparatus which can create a common file of Example 1 will be described with reference to FIGs. 1 to 11 so as to describe the above-described embodiments in detail.

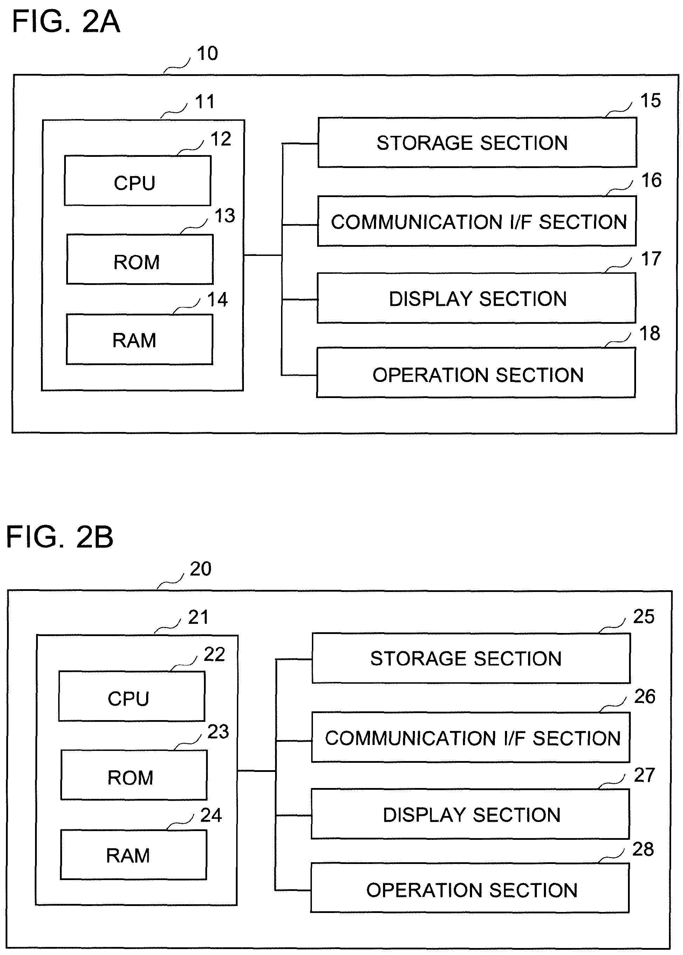

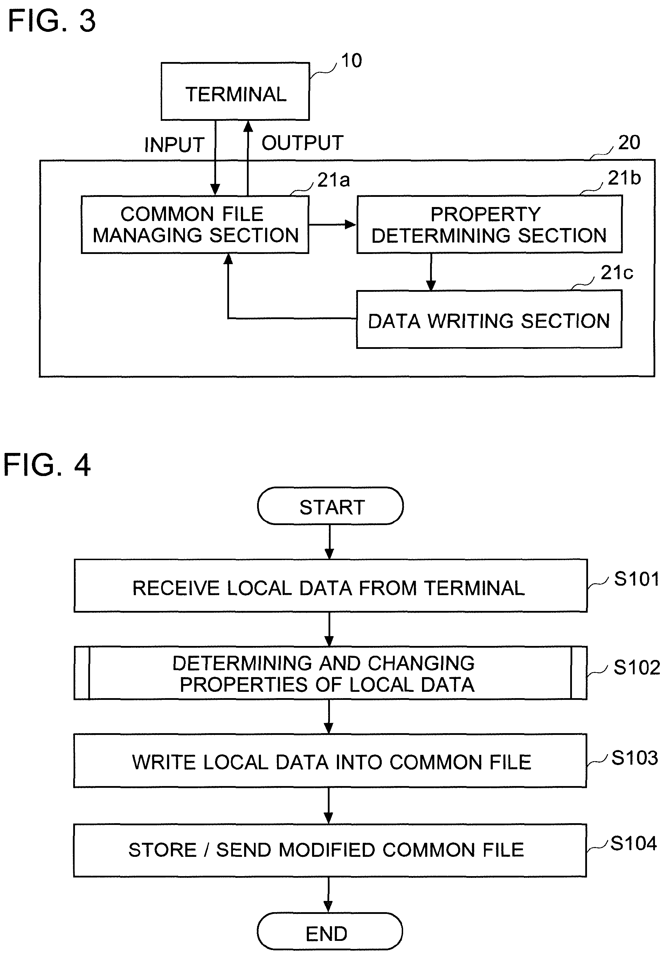

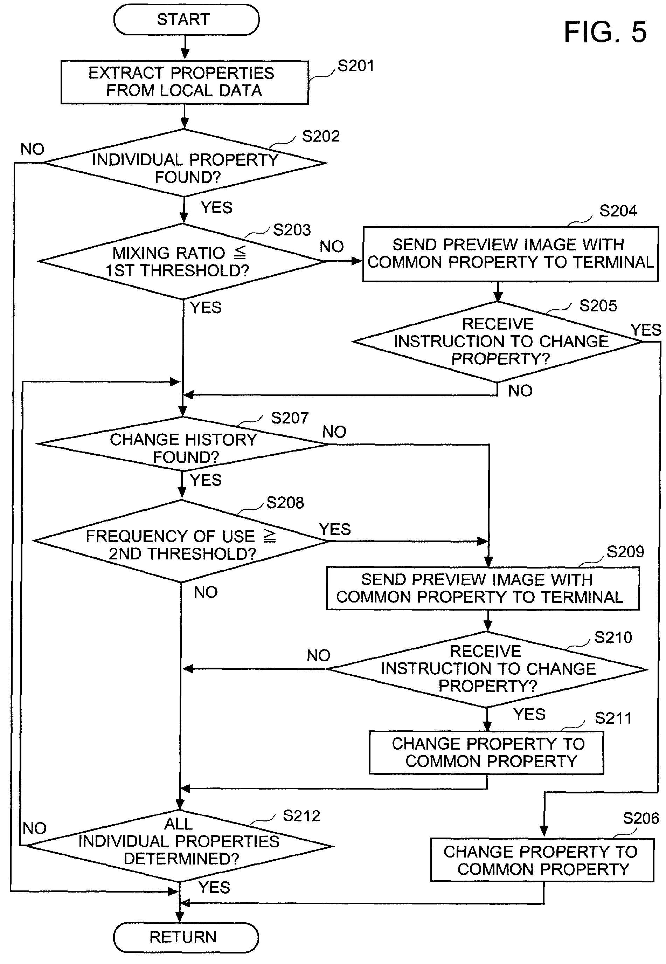

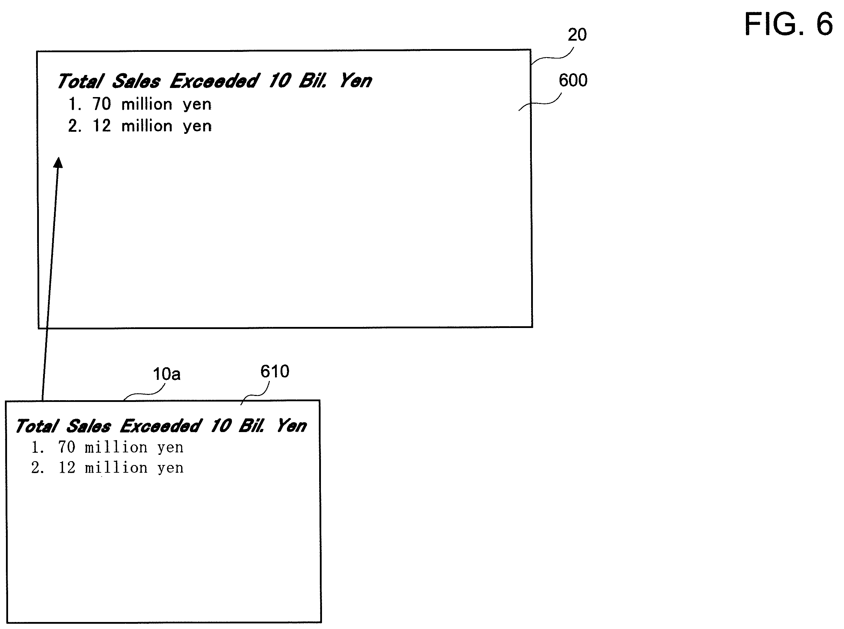

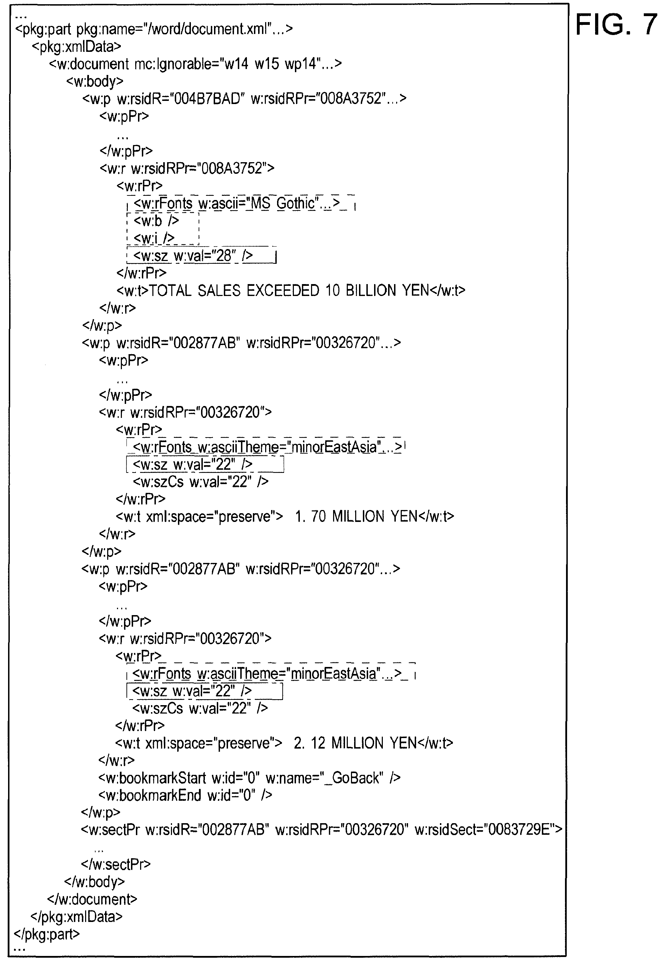

FIG. 1 is a diagram illustrating an example of the structure of a common-file creating system of Example 1. FIGs. 2A and 2B is block diagrams illustrating an example of the hardware structure of a terminal and the hardware structure of a processing apparatus of Example 1. FIG. 3 is a block diagram illustrating an example of the functional structure of the processing apparatus of Example 1. Each of FIG. 4 and FIG.5 is a flowchart illustrating an example of the operation of the processing apparatus of Example 1. Each of FIGs. 6, 8 and 10 is a diagram illustrating an example of the process of writing an object into a common file. Each of FIGs. 7, 9 and 11 is a diagram illustrating an example of the contents of local data written in XML (a part relating to the properties of objects extracted from the local data).

A common-file creating system of the present example includes one or plural terminals 10 and processing apparatus 20. Each terminal 10 can create local data to be written into a common file which is shared by plural users in group work. The processing apparatus 20 is communicable with the one or plural terminals 10 by using wired or wireless communications and can create and/or modify the common file by using the local data sent from the terminal 10.

In FIG. 1, illustrated is an example of a common-file creating system of the present example, including terminals 10a, 10b and 10c, and processing apparatus 20.

Examples of terminal 10 (each of terminals 10a, 10b, 10c in FIG. 1) include desktop PCs (personal computers), notebook PCs, slate PCs, tablet terminals and smartphones. As illustrated in FIG. 2, terminal 10 includes controller 11 which includes CPU 12, ROM 13 and RAM 14; storage section 15; communication I/F (interface) section 16; display section 17; and operation section 18. Terminal 10 is configured to allow a user to create objects through an application which runs on an OS (operating System) such as Windows OSs and Android OSs, send local data which includes one or more objects to processing apparatus 20, and receive data of a common file from processing apparatus 20, where Windows is a registered trademark of Microsoft Corporation and Android is a registered trademark of Google Inc.

Examples of processing apparatus 20 includes computing devices, server devices, display panels with computing function, and electronic blackboards (or whiteboards). Processing apparatus 20 is configured to manage a common file and write each object in local data received from terminal 10 into the common file, by using an appropriate property. The processing apparatus 20 includes, as illustrated in FIG. 2B, controller 21, storage section 25, communication I/F (interface) section 26, display section 27 and operation section 28. If a server device is employed as the processing apparatus 20, display section 27 and operation section 18 may be omitted from the processing apparatus 20.

Controller 21 includes CPU (Central Processing Unit) 22, and storages including ROM (Read Only Memory) 23 and RAM (Random Access Memory) 24. CPU 22 reads control programs (including a property control program which will be described later) from ROM 23, loads the control programs onto RAM 24, and executes the control programs, thereby performing the whole control of the processing apparatus 20.

Examples of storage section 25 include a HDD (Hard Disk Drive) and SSD (Solid State Drive). Storage section 25 stores data of a common file, local data received from one or plural terminals 10, and information of at least one common property, such as a default property of a common file and a property set by a user for use in a common file.

Examples of communication I/F section 26 include NICs (Network Interface Cards) and modems. Communication I/F section 26 establishes communications with each terminal 10, receives local data from terminal 10 and sends data of a common file to the terminal 10. Further, when controller 21 performs a process of changing a property of local data, communication I/F section 26 sends data of a preview image of the local data with the property changed to the corresponding common property, to the terminal 10, and receives instruction information whether to change the property to the corresponding common property or not.

Display section 27 includes a display unit such as a LCD (Liquid Crystal Display) and organic EL (Electro-Luminescence) display, so as to display a common file or other information.

Operation section 28 includes a device such as a touch sensor and hardware keys, and receives various kinds of user's operation on a common file, where a touch sensor includes electrodes arranged in a lattice shape on display section 27. In the processing apparatus 20 which automatically creates and/or modifies a common file, the display section 27 and operation section 28 may be omitted.

FIG. 3 illustrates an example of the functional structure of processing apparatus 20, and controller 21 of processing section 20 works as common file managing section 21 a, property determining section 21b and data writing section 21 c.

Common file managing section 21 a manages data of a common file, receives local data from terminal 10, and transfers the received local data to property determining section 21b. Common file managing section 21a further receives data of a common file into which the local data has already written, from data writing section 21 c, and outputs data of the common file into which the local data has already written, to the terminal 10 at a predetermined time (for example, on receiving a data obtaining request from terminal 10, or on receiving data of the common file into which the local data has already written, from data writing section 21 c).

Property determining section 21b analyzes local data, extracts from the local data at least one property of each object contained in the local data, and compares each property extracted from the local data with at least one common property previously set for use in the common file, where the common property is one of a default property of the common file or a property previously set by a user for use in the common file. If the extracted properties include one or more individual properties, which are different from the at least one common property, property determining section 21b calculates the mixing ratio of the individual properties, and determines whether the mixing ratio does not exceed a first threshold. If the mixing ratio exceeds the first threshold, in order to secure the sense of unity of objects in the common file, property determining section 20b changes each the properties of all the objects in the local data (each of all the properties in the local data) to the corresponding common property. In this process, optionally, property determining section 21b may create a preview image of the local data under the assumption that the properties of all the objects in the local data are changed into the common property, send data of the preview image to terminal 10 which sent the local data to the processing apparatus 20, and cause a user to choose whether to change every property to the common property or not through operation section 18 of the terminal 10. For example, the mixing ratio is obtained by calculating the ratio of the number of the individual properties set in the common file and the currently processed local data to the number of properties set in the common file. The number of properties set in the common file is equivalent, in the initial state of the common file, to the number of default properties of the common file; and is equivalent, in the state that local data has already been written into the common file, to the total number of the default properties of the common file and individual properties of one or more objects which have already been written into the common file with the properties determined to be kept. The first threshold corresponds to the mixing ratio by which a sense of unity of objects in the common file can be secured, and can be set to an arbitrary number.

If the mixing ratio of individual properties does not exceed the first threshold, property determining section 20b checks a history of changes of each of the individual properties. If no change history is found (in other words, the individual property has not ever been changed from the default property of the local data), property determining section 21b determines that the individual property is a non-special property and changes the individual property to the corresponding common property. In this process, optionally, property determining section may create a preview image of the local data under the assumption that the individual property is changed to the common property, send the data of the preview image to terminal 10 which sent the local data to the processing apparatus 20, and cause a user to choose whether to change the individual property to the corresponding common property.

If there is found a change history (in other words, the individual property has ever been changed from the default property of the local data), property determining section 21b calculates the frequency of use of the individual property and determines whether the frequency is not less than a predetermined second threshold. If the frequency of use is not less than the second threshold (determining that the individual property is used frequently in the local data), property determining section 21b determines that the individual property is a non-special property and changes the individual property to the corresponding common property. In this process, optionally, property determining section may create a preview image of the local data under the assumption that the individual property is changed to the corresponding common property, send the data of the preview image to terminal 10 which sent the local data to the processing apparatus 20, and cause a user to choose whether to change the individual property to the corresponding common property. The frequency of use of the individual property is an indicator showing how frequently the individual property in the local data which is currently processed is used. For example, if the local data is composed of a text object, the ratio of the number of characters having the individual property concerned in the text object of the local data to the number of all the characters in the all text objects in the common file and the local data, is given as the frequency of use of the individual property.

If there is found no individual property which is different from the common property in the extracted properties, each of the extracted properties should be kept and property determining section 21b does not change the property to the common property as far as the mixing ratio of the individual property does not exceed the first threshold, there is a change history of the individual property and the frequently of use of the individual property is less than the second threshold.

Data writing section 21c writes one or more objects of the local data which have already processed by the property determining section 21b, into the common file, and transfers data of the resulting common file to common file managing section 21a.

The common file managing section 21 a, the property determining section 21b and the data writing section 21c may be provided as hardware devices. Alternatively, the common file managing section 21a, the property determining section 21b and the data writing section 21c may be provided by a program (referred to as a property control program) which causes the controller 21 to function as these sections when being executed. That is, the controller 21 may be configured to serve as the common file managing section 21a, the property determining section 21b and the data writing section 21 c, when CPU 22 executes a property control program.

Hereinafter, description is given to the operation of processing apparatus 20 which employs the above-described structure. CPU 22 loads a property control program stored in ROM 23, onto RAM 24, and executes the property control program, to cause the controller 21 of processing apparatus 20 to perform processing of the steps shown in the flowcharts of FIG. 4 and FIG. 5. The following description is given under the assumption that the first threshold to be used as a value of the criterion based on the mixing ratio and the second threshold to be used as a value of the criterion based on the frequency of use have already been defined.

First, a user creates local data on terminal 10. The format of the local data is not particularly limited. Examples of the local data include various kinds of OOXML (Office Open XML) data created by Microsoft applications, such as Microsoft Word, Microsoft Excel and Microsoft PowerPoint; PDF data created by applications such as Adobe Acrobat; image data, such as bitmap data and JPEG data, created by image processing applications; and handwriting data created by handwriting applications, where Microsoft, Word, Excel and PowerPoint are either registered trademarks or trademarks of Microsoft Corporation in the United States and/or other countries, and Adobe and Acrobat are either registered trademarks or trademarks of Adobe Systems Incorporated in the United States and/or other countries. When the user sends the created local data to processing apparatus 20, controller 21 (common file managing section 21 a) of processing apparatus 20 receives the local data (S101).

Next, controller 21 (property determining section 21b) performs processing of determining and changing properties of the local data (S102). In concrete terms, controller 21 (property determining section 21b) analyzes the local data, extracts from the local data one or more properties of each object in the local data, and determines whether to keep or change each property extracted from the local data by determining the property by using the mixing ratio, determining the property by using the change history, and determining the property by using the frequency of use. Then, controller 21 (property determining section 21b) changes each property in accordance with a result of the determination. The processing of determining and changing properties will be described later in detail.

Next, controller 21 (data writing section 21c) writes the local data on which the processing of determining and changing properties has been performed, into the common file (S103). The format of the common file is not particularly limited, too. For example, Word data written in OOXML (Office Open XML), which has a filename including the extension '.docx', can be the common file, wherein controller 21 (data writing section 21 c) can write the local data into the common file by writing information of one or more objects in the local data and their properties in XML according to the hierarchy rule of the Word data.

After that, data writing section 21c transfers the resulting common file into which the local data has been written, to common file managing section 21 a. Controller 21 (common file managing section 21a) stores the common file into storage section 25, and optionally, may send data of the common file to terminal 10 (S104). Then, when controller 21 (common file managing section 21a) further receives other local data from terminal 10, controller 21 repeats the processing of the steps of S101 to S104.

Next, with reference to FIG. 5, description is given to the processing of determining and changing properties in S102 in the flowchart illustrated in FIG. 4. The following description is given under the assumption that common properties have already been defined.

First, controller 21 (property determining section 21b) analyzes local data and extracts properties of one or more objects contained in the local data (S201). A concrete example of local data is given by using MS Word data written in OOXML. An example of local data, provided as MS Word data in OOXML format, includes package parts or document parts as shown in Table 1. An example of the contents of <pkg:part pkg:name="/word/document.xml"...> is shown in each of FIGs. 7, 9 and 11.

**TABLE 1**

| |
|---|
| <pkg:package> |
| + <pkg:part pkg:name="/_rels/.rels"... |
| + <pkg:part pkg:name="/word/_rels/document.xml.rels"... |
| - <pkg:part pkg:name="/word/document.xml"... |
| - <pkg:xmlData> |
| - <w:document mc:Ignorable="w14 w15 wp14"> |
| + <w:body> |
| + <pkg:part pkg:name="/word/footnotes.xml"... |
| + <pkg:part pkg:name="/word/endnotes.xml"... |
| + <pkg:part pkg:name="/word/footer1.xml"... |
| + <pkg:part pkg:name="/word/theme/theme1.xml"... |
| + <pkg:part pkg:name="/word/_rels/settings.xml.rels"... |
| + <pkg:part pkg:name="/word/settings.xml"... |
| + <pkg:part pkg:name="/word/fontTable.xml"... |
| + <pkg:part pkg:name="/word/webSettings.xml"... |
| + <pkg:part pkg:name="/customXml/rels/item1.xml.rels"... |
| + <pkg:part pkg:name="/customXml/itemProps1.xml"... |
| + <pkg:part pkg:name="/word/styles.xml"... |
| + <pkg:part pkg:name="/docProps/app.xml"... |
| + <pkg:part pkg:name="/docProps/core.xml"... |
| + <pkg:part pkg:name="/customXml/item1.xml"... |

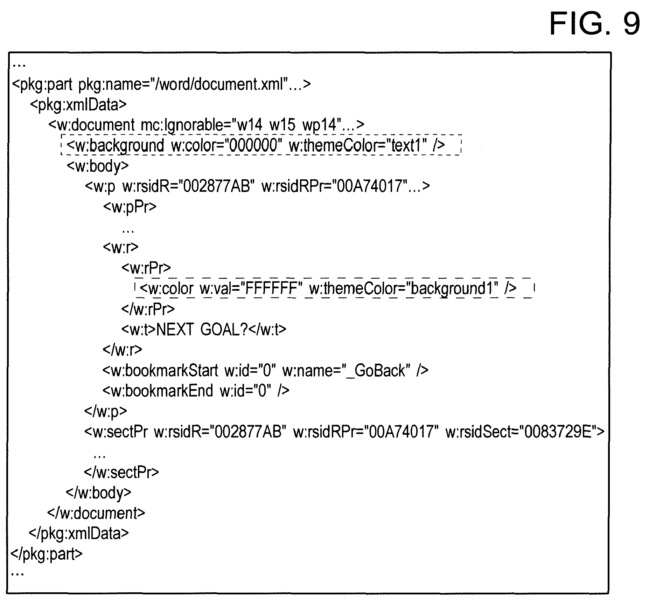

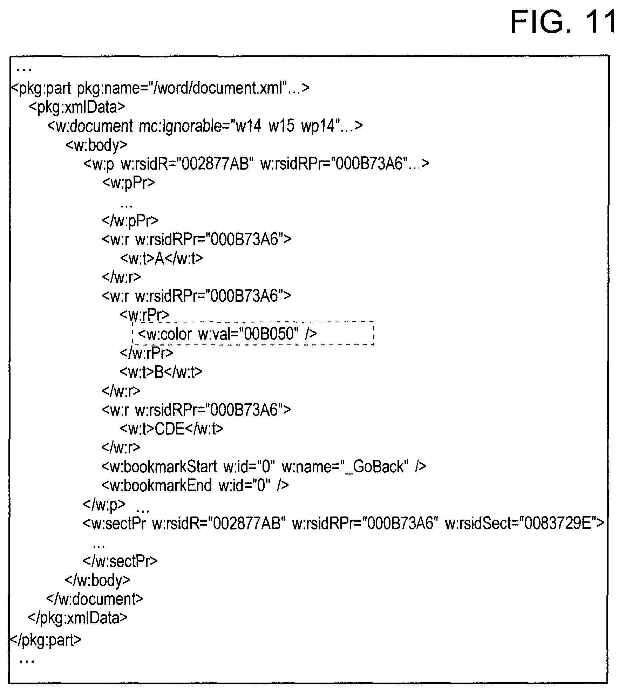

Since information of a property of an object can be written in the next line to <w:document ...> in the <pkg:xlData> element (as a child of <pkg:package> - <pkg:part pkg:name="/word/document.xml"...> - <pkg:xmlData> elements) as illustrated in FIG. 9, or in the <w: rPr> element (as a child of <w:document...> - <w:body> - <w:rPr> elements) as illustrated in FIGs. 7 and 11, property determining section 21b can extract a property of an objects contained in the local data by referring these positions in the local data.

As one example, there is given a situation that local data 610, which was created by user A on terminal 10a and is Word data in OOXML, is sent to processing apparatus 20 which is creating common file 600, with reference to FIG. 6. As illustrated in FIG. 6, local data 610 created by user A includes text objects 'Total Sales Exceeded 10 Bil. Yen', '1. 70 million yen' and '2. 12 million yen'. FIG. 7 illustrates an example of a part of the contents of the local data 610 corresponding to these objects. The '<w:b/>' and '<w:i/>' elements surrounded by a dotted line in FIG. 7 specify properties of bold and italic, respectively, which shows that 'Total Sales Exceeded 10 Bil. Yen' has been written as bold and italic text into the local data. In FIG. 7, the '<w:sz w: val=...>' element surrounded by a one dot chain line and the '<w:rFonts w:ascii=...>' elements surrounded by a dashed line specify font-face properties, which show that 'Total Sales Exceeded 10 Bil. Yen' has been written as text in 28-point, MS-Gothic font, and '1. 70 million yen' and '2. 12 million yen' have been written as text in 22-point, MS-Mincho font.

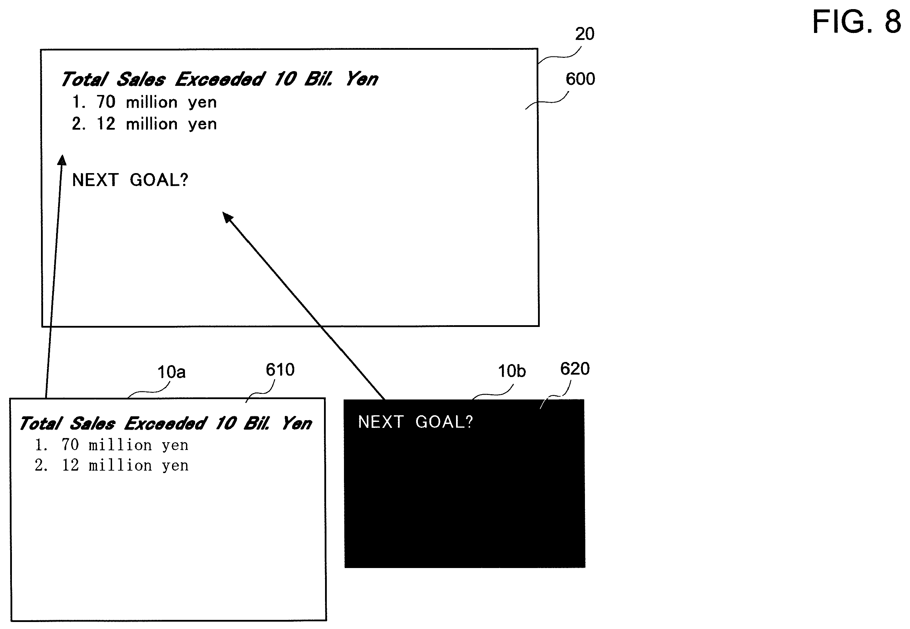

As another example, there is given a situation that local data 620, which was created by user B on terminal 10b is Word data in OOXML, is further sent to processing apparatus 20. As illustrated in FIG. 8, local data 620 created by user B includes a text object 'NEXT GOAL?'. FIG. 9 illustrates an example of a part of the contents of the local data 620 corresponding to the object. In FIG. 9, the '<w:background w:color =...>' element surrounded by a dotted line in and 'the <w:color w:val=...>' element surrounded by a dashed line specify properties of background color and font color, respectively, which show that 'NEXT GOAL?' has been written as white text in a black background.

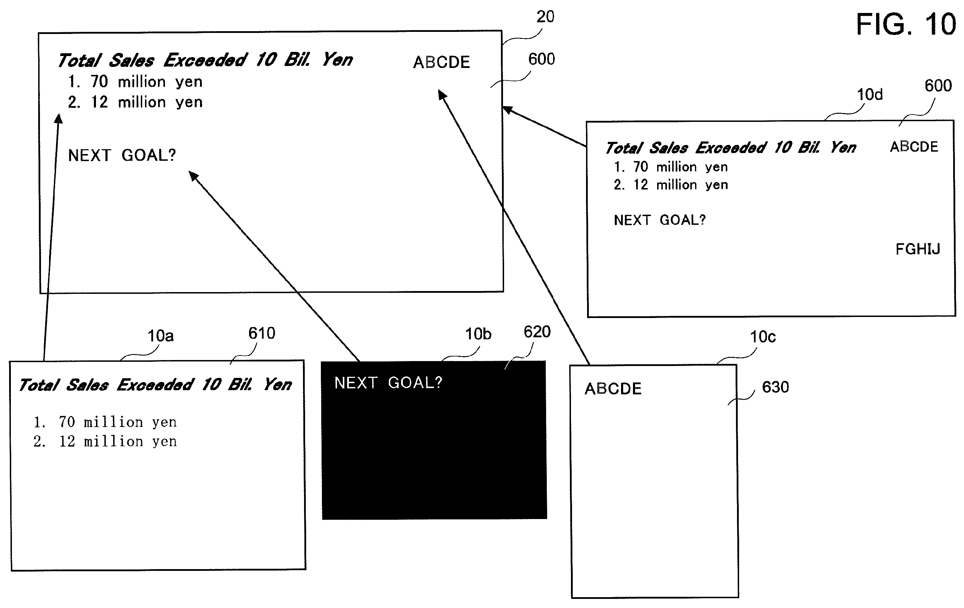

As another example, there is given a situation that local data, which was created by user C on terminal 10c is Word data in OOXML, is further sent to processing apparatus 20. As illustrated in FIG. 10, local data 630 created by user C includes a text object 'ABCDE'. FIG. 11 illustrates an example of a part of the contents of the local data 630 corresponding to the object. The '<w:color w:val=...>' element surrounded by a dotted line in FIG. 11 specifies the property of font color, which shows that letters 'A' and 'CDE' have been written in black and a letter 'B' has been written in green (represented by a shaded letter in FIG. 10).

Returning to the flowchart of FIG. 5, controller 21 (property determining section 21b) compares properties of one or more objects in local data with the predetermined common properties, and checks whether the properties of the one or more objects in the local data includes at least one individual property which is different from the common properties (S202).

If no individual property which is different from the common properties has been found in the local data, since there is no need to change the properties in the local data, the controller 21 (property determining section 21b) terminates the processing of determining and changing properties. If one or more individual properties being different from the common properties have been found in the local data, the controller 21 (property determining section 21b) checks whether the mixing ratio of the individual property or properties is not greater than the predetermined first threshold (for example, 50%) or not (S203).

The great mixing ratio indicates that a greater number of individual properties being different from the common properties should exist in the common file, which can affect a sense of unity between objects in the common file. In such a situation, the common file can be displayed with better uniformity by replacing each of the individual properties to the corresponding common property, therefore, controller 21 (property determining section 21b) changes each of the individual properties to the corresponding common property. Since user's intentions given to the properties of the objects can be lost with this processing of changing properties, controller 21 (property determining section 21b) creates a preview image of the local data under the assumption that each property of all the objects contained in the local data to the corresponding common property, sends data of the preview image to terminal 10 which sent the local data to the processing apparatus 20 (S204), and causes a user to choose whether to change the each individual property to the corresponding common property (S205). If a user has chosen to change each individual property to the corresponding common property (the processing apparatus 21 has received instruction information about the property change), controller 21 (property determining section 21b) changes each individual property of all the objects contained in the local data to the corresponding common property (S206), and terminates the processing of the flowchart.

If the mixing ratio does not exceed the first threshold in S203 and a user did not give an instruction about changing the properties to the common property (the processing apparatus 21 has not received instruction information about the property change), controller 21 (property determining section 21b) determines whether each individual property has a change history of changes (S207). For example, if a text object uses a certain font face which is different from the common property and has not ever been changed by a user, the controller 21 (property determining section 21b) determines that the font face represents non-special meaning in the context. Similarly, if a text object uses a certain font size which is different from the common property and has not ever been changed by a user, the controller 21 (property determining section 21b) determines that the font size represents non-special meaning in the context. The history of property changes can be judged on the basis of the existence or the location of information about the individual property in the local data. In an example that local data is Word data written in OOXML, in response to a change of a property of an object by a user, information about the changed property which is associated with the object is added to the Word data (in the <pkg:xmlData> element in the <pkg:part pkg:name="/word/document/xml" ...> element), on the other hand, information about the default property of the Word data is located in a predetermined position in the Word data. Therefore, controller 21 (property determining section 21b) can determine a history of property changes on the basis of the existence or the location of information about a property concerned.

If there is no change history of the individual property concerned, controller 21 (property determining section 21b) changes the individual property to the corresponding common property. Since user's intentions given to the properties of the objects can be lost with this processing of changing properties, controller 21 (property determining section 21b) creates a preview image of the local data under the assumption that the individual property to the corresponding common property, similarly to the above, sends data of the preview image to terminal 10 which sent the local data to the processing apparatus 20 (S209), and causes a user to choose whether to change the individual property to the corresponding common property (S210). If a user has chosen to change the individual property to the corresponding common property (the processing apparatus 21 has received instruction information about the property change), controller 21 (property determining section 21b) changes the individual property to the corresponding common property (S211), and goes to the step of S212 in the flowchart.

If there is a change history of the individual property concerned, controller 21 (property determining section 21b) determines the frequency of use of the individual property is not less than the predetermined second threshold (S208). For example, if a text object uses a certain font face which is different from the common property, the controller 21 (property determining section 21b) counts the number of characters set to the certain font face in the local data, and determines that the font face represents no special meaning in the context, if the certain font face is most frequently used in the local data. Similarly, if a text object uses a certain font size which is different from the common property, the controller 21 (property determining section 21b) counts the number of characters set to the certain font size in the local data, and determines that the font size represents no special meaning in the context, if the certain font size is most frequently used in the data.

If the frequency of use of the individual property is not less than the second threshold, controller 21 (property determining section 21b) changes the property to the corresponding common property. Since user's intentions given to the properties of the objects can be lost with this processing of changing properties, controller 21 (property determining section 21b) creates a preview image of the local data under the assumption that the individual property to the corresponding common property, similarly to the above, sends data of the preview image to terminal 10 which sent the local data to the processing apparatus 20 (S209), and causes a user to choose whether to change the individual property to the corresponding common property (S210). Then, controller (property determining section 21b) sends instruction information according to the user's choice to processing apparatus 20. In concrete terms, if a user has not instructed about changing the individual property to the common property, controller 21 (property determining section 21b) goes to the step of S212, and if a user has instructed about changing the individual property to the common property, controller 21 (property determining section 21b) changes the individual property to the common property (S211), and then goes to the step of S212 in the flowchart.

Next, controller 21 (property determining section 21b) determines whether the above processing on all the individual properties which are different from the common properties has been done (S212). If finding an outstanding individual property, controller 21 (property determining section 21b) returns to the step S207 and repeats the same processing on the outstanding individual property. When all the individual properties have been processed, controller 21 (property determining section 21b) terminates the processing of the flowchart.

A concrete example of the processing of the flowchart is given with reference to FIGs. 6 to 11. In the example, it is assumed that processing apparatus 20 creates common file 600 on the basis of local data 610 sent from terminal 10a of user A as illustrated FIG. 6, and then local data 620 sent from terminal 10b of user B and local data 630 sent from terminal 10c of user C are added to the common file 600 in this order as illustrated in FIG. 8 and FIG.10. Further, it is assumed that local data is composed of one or more text objects, a text object can use five properties: font face, font size, font color, background color and font style, and as common properties, "MS Gothic" font face, 24 point, "black" font color, "white" background color and "standard" font style have been established in advance. It is further assumed that the number of properties which have been set in the common file is ten and both of the first threshold and the second threshold are set to 50%. Local data (object in local data) can be written so as to be located at an arbitrary position in the common file but it is assumed that the local data is written into the common file in accordance with a predetermined rule, for example, in order from the upper left to the lower left, or in order from the upper right to the lower left in the document represented by the common file.

FIG. 6 illustrates a situation that processing apparatus 20 displays on the screen common file 600 created by using local data 610 sent from terminal 10a of user A. The data 610 includes an object 'Total Sales Exceeded 10 Bil. Yen' using individual properties (bold italic style and 28 point) which are different from the common properties, and objects '1. 70 million yen' and '2. 12 million yen' each using individual properties (22 point, MS-Mincho font face) which are also different from the common properties. The mixing ratio of the individual properties is 40% (= 4 / 10), which is less than the first threshold (50%). The individual properties of the object 'Total Sales Exceeded 10 Bil. Yen' have been changed by a user (the change history was written in the local data with being associated with the object) and the frequency of use of each of the properties is 47% (32 letters / 68 letters), which is less than the second threshold (50%). Therefore, this object is written into the common file as its properties are kept (corresponding to the flow of YES of S202, YES of S203, YES of S207 and NO of S208 in the flowchart of FIG. 5 in this order). On the other hand, the individual properties of the objects '1. 70 million yen' and '2. 12 million yen' have been changed by a user (the change history was written in the local data with being associated with the object) and the frequency of use of each of the properties is 53% (36 letters / 68 letters), which is not less than the second threshold (50%). Therefore, these properties are changed into the corresponding common properties (24 point, MS-Gothic font face) and the objects are written into the common file by using the changed properties (corresponding to the flow of YES of S202, YES of S203, YES of S207, YES of S208 and S211 in the flowchart of FIG. 5 in this order).

In the above-described situation, the object 'Total Sales Exceeded 10 Bil. Yen' in the common file keeps the original font size (28 point) which was set in the terminal 10a, and properties of the objects '1. 70 million yen' and '2. 12 million yen' are changed into the size (24 point) defined as the common properties. Under a situation that a piece of local data is composed of plural objects and controller 21 (property determining section 21b) of processing apparatus 20 changes properties of a part of the objects into the corresponding common properties, the controller 21 (property determining section 21b) may change the original font size of the other objects into an increased or reduced font size so as to keep the original ratio of the font size of the other objects to that of the part of the objects. In the above example, the controller 21 (property determining section 21b) may change the font size of the object 'Total Sales Exceeded 10 Bil. Yen' to 26 (≈ 28 point × 22 point / 24 point).

FIG. 8 illustrates another situation that the processing apparatus 20 displays on the screen common file 600 to which local data 620 received from terminal 10b of user B was added. The local data 620 includes an object 'NEXT GOAL?' using individual properties (black background and white font color) which are different from the common properties. The mixing ratio of the individual properties is about 33% (4 / 12), since there are four individual properties (bold italic style and 28 point of the object 'Total Sales Exceeded 10 Bil. Yen' and black background and whit font color of the object 'NEXT GOAL?'), and twenty properties (two properties of the bold italic style and 28 point and ten properties which have been established in the common file in the initial state), and the mixing ratio is less than the first threshold (50%). If there is no change history of the individual property of the object 'NEXT GOAL?', the individual properties of the object is changed into the corresponding common properties and the object is written into the common file 600 (corresponding to the flow of YES of S202, YES of S203, NO of S207, YES of S210 and S211 in the flowchart of FIG. 5 in this order). In this process, the controller 21 writes the local data 620 below the local data 610 which has already been written into the common file 600 such that data 620 does not overlap with data 610 in the common file 600 which is displayed.

FIG. 10 illustrates another situation that the processing apparatus 20 displays on the screen common file 600 to which local data 630 received from terminal 10c of user C was further added. The local data 630 includes an object 'ABCD' using an individual property (green font color set for letter 'B') which are different from the common properties. The mixing ratio of the individual property is 25% (3 / 12), since there are three individual properties (bold italic style and 28 point of the object 'Total Sales Exceeded 10 Bil. Yen' and green font color of letter 'B'), and twenty properties (two properties of the bold italic style and 28 point and ten properties which have been established in the common file in the initial state), and the mixing ratio is less than the first threshold (50%). The individual property of the letter 'B' has been changed by a user (the change history was written in the data with being associated with the object) and the frequency of use of the property is about 0.1% (1 letter / 83 letters), which is less than the second threshold (50%). Therefore, this object is written into the common file 600 as its property is kept (corresponding to the flow of YES of S202, YES of S203, YES of S207 and NO of S208 in the flowchart of FIG. 5 in this order). In this process, the controller 21 writes the local data 630 at the upper right part of the common file 600 which is displayed such that data 630 do not overlap with data 620 and data 610 in the common file 600 which is displayed.

In the above example, the screens of terminals 10a to 10c just display local data 610, 620, 630, respectively, under the assumption that users A to C are at the respective places where the users can watch the screen of processing apparatus 20. In another situation that a certain user (user D) is at the place from which the user cannot watch the screen of processing apparatus 20, terminal 10d of the user may display the current common file on its screen so that the user can create the user's local data while watching the current common file, as illustrated in FIG. 10.

As described above, on receiving local data including an object or objects which use at least one individual property being different from the common properties, the controller 21 of processing apparatus 20 writes the object or objects into the common file as the at least one individual property is kept, if the mixing ratio of individual properties is not greater than the first threshold, each individual property has ever been changed, and the frequency of use of each individual property is less than the second threshold. Otherwise, the controller 21 of processing apparatus 20 changes each individual property to the corresponding common property and writes the object or objects into the common file. With this control, the controller 21 of processing apparatus 20 can create a common file which gives users a sense of unity between the displayed objects. Optionally, on changing each individual property into the corresponding common property, the controller 21 of processing apparatus 20 may cause terminal 10 to display a preview image of the local data created under the assumption that each individual property changed into the corresponding common property, and causes a user to choose whether to change each individual property into the corresponding common property. With this control, the controller 21 of processing apparatus 20 can create a common file reflecting users' intentions.

### EXAMPLE 2

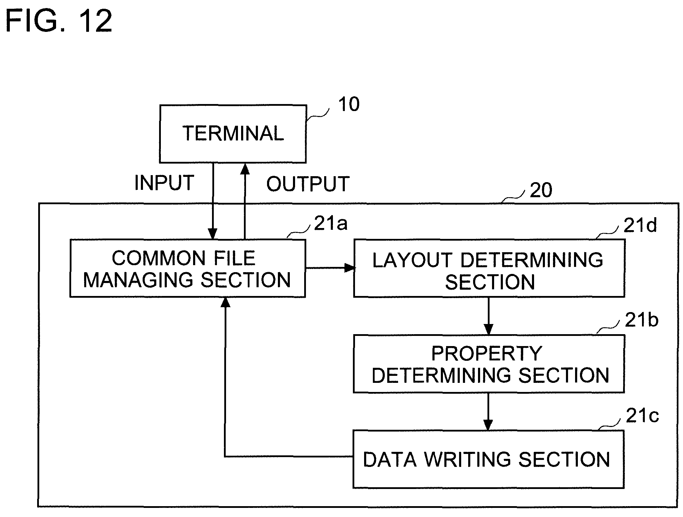

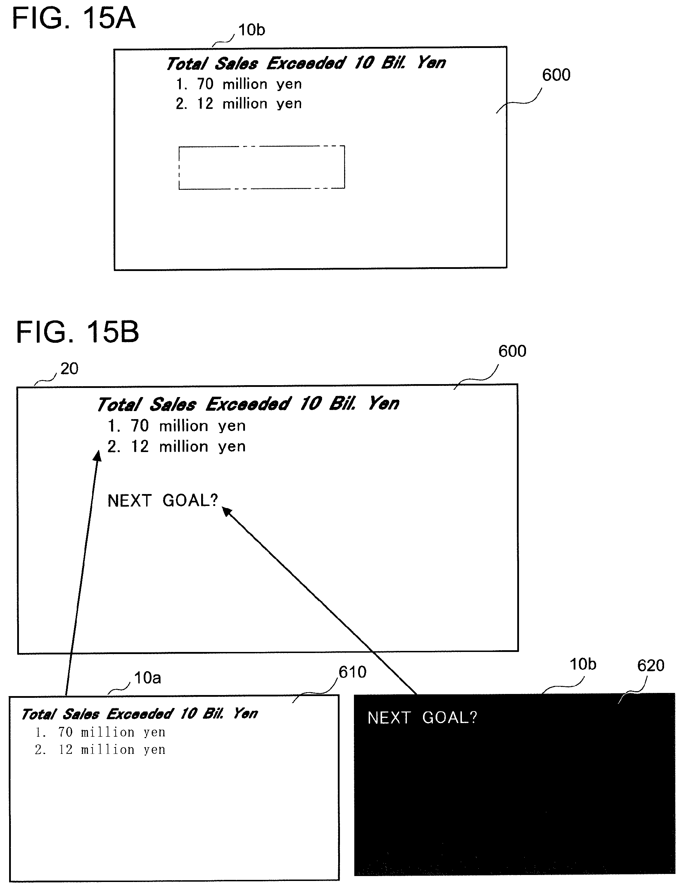

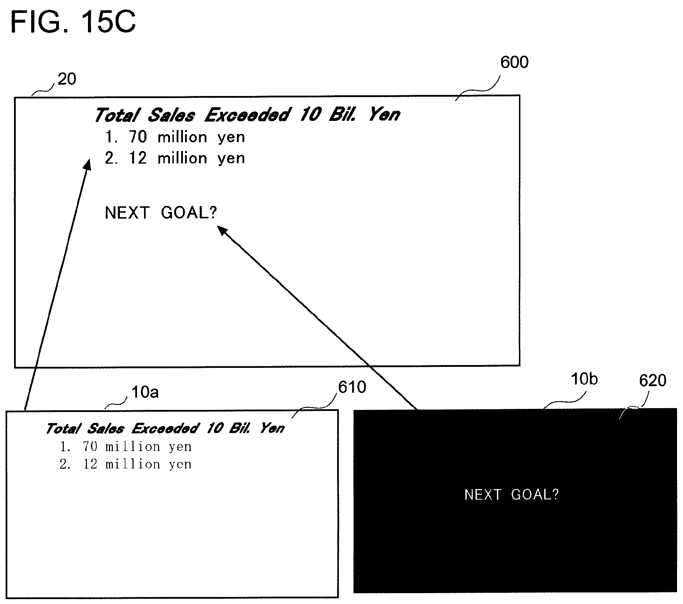

A property control program, property control method, common-file creating system and processing apparatus which can create a common file of Example 2 will be described with reference to FIGs. 12 to 16D so as to describe the above-described embodiments in detail.

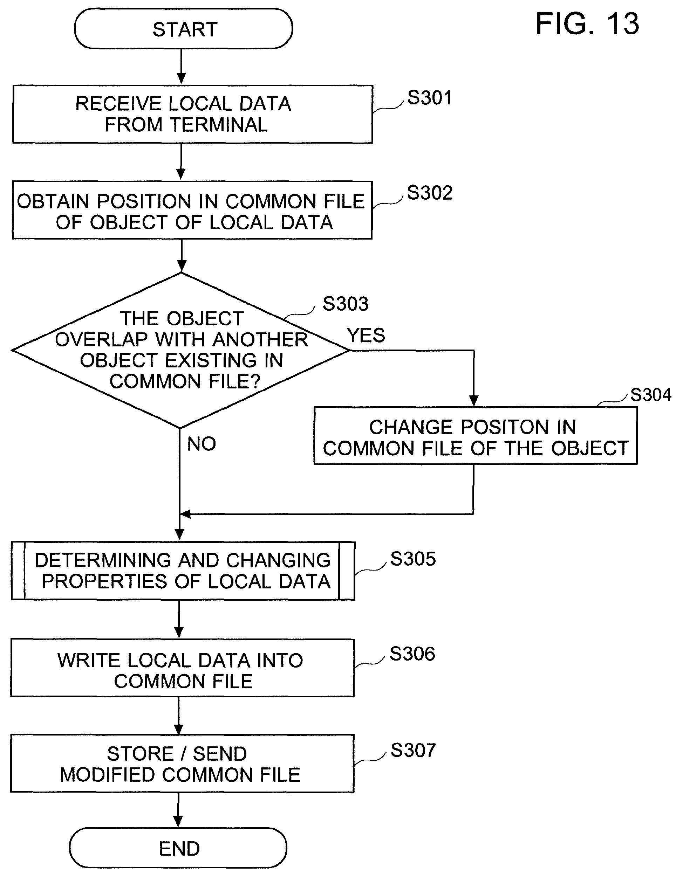

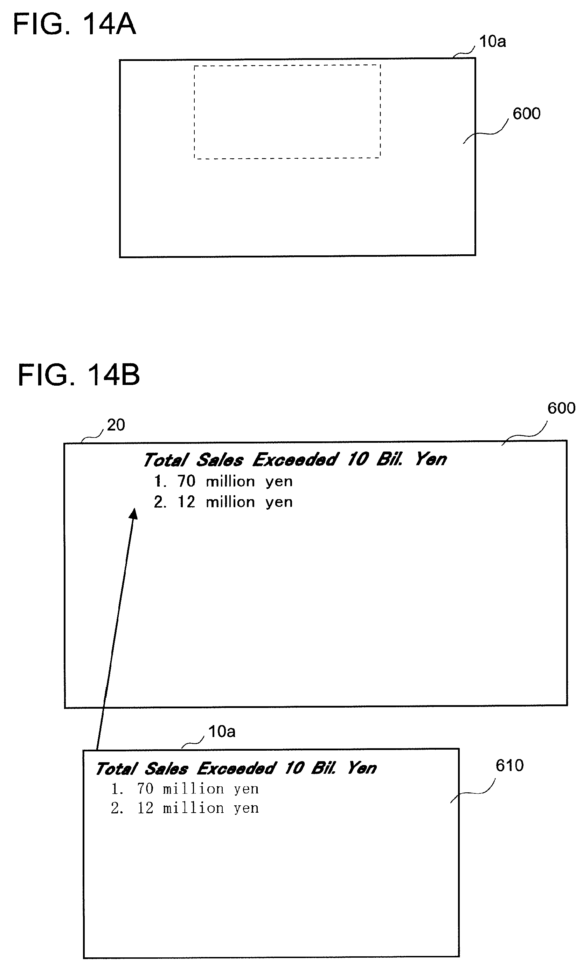

FIG. 12 is a block diagram illustrating an example of the functional structure of the processing apparatus of Example 2, and FIG. 13 is a flowchart illustrating an example of the whole operation of the processing apparatus of Example 2. FIGs. 14A to 16D are diagrams illustrating examples of the process of writing an object into a common file.

In Example 1, description was given to the property control of the processing apparatus such that the controller writes an object in the local data into the common file without specifying the position at which an object is to be put. Alternatively, the controller may specify the position on writing an object into the common file. In Example 2, description is given to a processing apparats supporting such control. The hardware structure of the processing section 20 is same as that in Example 1, illustrated in FIG. 2, but the functional structure of the processing section 20 is as illustrated in FIG. 12. The controller 21 also works as layout defining section 21 additionally to common managing section 21a, property determining section 21b, data writing section 21c, and layout determining section 21d, as illustrated in FIG.12.

The layout defining section 21d analyzes received local data, and extracts layout information of each object contained in the local data. Then, the layout determining section 21d obtains coordinates of each object and determines whether there is another object located at the coordinates in the common file, where the coordinates is defined in accordance with the layout information under an assumption that the each object is written into the common file. If determining that there is another object located at the coordinates in the common file, the layout defining section 21d changes the layout information such that the each object is not overlapped with the another object in the common file such that the each object can be written in to the common file by using the changed layout information.

The common file managing section 21a, the property determining section 21b, the data writing section 21 c and the layout determining section 21 d may be provided as hardware devices. Alternatively, the common file managing section 21 a, the property determining section 21b, the data writing section 21c and the layout determining section 21d may be provided by a program (referred to as a property control program) which causes the controller 21 to function as these sections when being executed. That is, the controller 21 may be configured to serve as the common file managing section 21 a, the property determining section 21b, the data writing section 21c and the layout determining section 21d, when CPU 22 executes a property control program.

Hereinafter, description is given to the operation of processing apparatus 20 which employs the above-described structure. CPU 22 loads a property control program stored in ROM 23, onto RAM 24 and executes the property control program, to cause the controller 21 of processing apparatus 20 to perform processing of the steps shown in the flowchart of FIG. 13.

First, a user creates local data by using one of terminals 10. The created local data includes layout information of each object in addition to information f properties of objects. The following two types can be considered as a way to put the layout information into the local data.

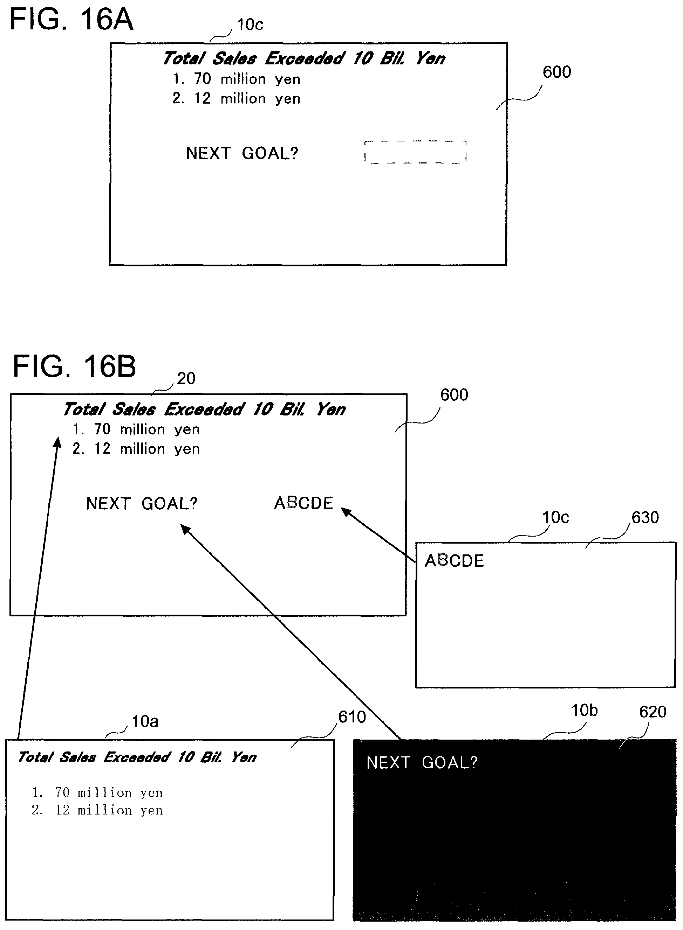

The first is described with reference to FIGs. 14A and 14B, FIGs. 15A and 15B and FIGs. 16A and 16B. As illustrated in FIGs. 14A, 15A and 16A, each of terminals 10a to 10c receives data of the common file 600 from processing apparatus 20 and displays the data on its screen. The terminals 10a to 10c cause respective users to specify the position where an object is to be written through a touch panel or a mouse of the terminal which is now used, and then creates local data 610, 620, 630, respectively. In this way, each of the terminals 10a to 10c may put layout information of each object in a header region of the local data or may create layout data including layout information of each object.

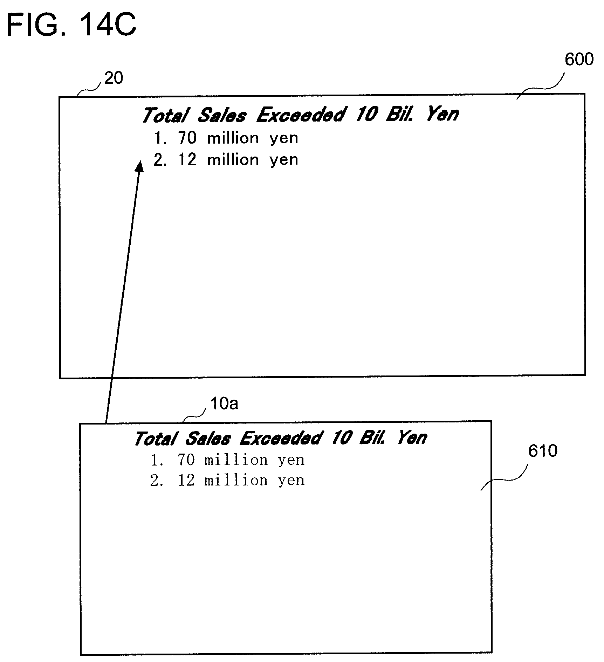

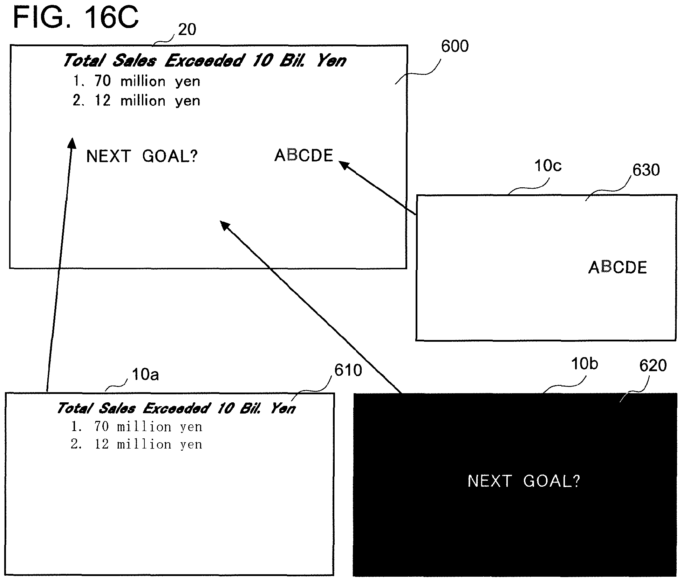

The second is a way to embed layout information of each object directly into the local data by using an application as illustrated in FIGs. 14C, 15C and 16C. In an example to create Word data in OOXML format, a user specifies the position of an object in the horizontal direction by using left align, center and right align commands, and specifies the position of the object in the vertical direction by creating blank lines, to create local data. In another example to create PowerPoint data in OOXML format, a user specifies the position of an object in the horizontal and vertical directions by selecting desired style or desired layout of a slide and moving an object in the slide, to create local data.

Then, in response to each of the terminals 10a to 10c sending the created local data to processing apparatus 20, controller 21 (common file managing section 21 a) of processing apparatus 20 receives the local data (S301 of the flowchart of FIG. 13).

Next, controlled 21 (layout defining section 21d) analyzes the received local data, extracts layout information of each object from the local data, and defines the position at which the object is to be written (the coordinates being defined in accordance with the layout information under an assumption that the each object is written into the common file) (S302). For example, in the situation that layout information was put in the header region of the local data or layout information was written into layout data, by using the first way, controlled 21 (layout defining section 21d) refers to the header region or the layout data and defines the position at which each object of the local data is to be written. In another situation that layout information of each object was written into the local data, by using the second way, controlled 21 (layout defining section 21d) defines the position at which each object of the local data is to be written, on the basis of information of an appropriate part of the local data. In the former example to use Word data in OOXML format, since the layout information is usually written in the part of <w:pPr> ... </w:pPr> in the <w:body> element, the <w:jc w:val = ...> element, or another position, controlled 21 (layout defining section 21d) refers to information at these positions in the local data and obtains the position (coordinates) at which each object of the local data is to be written. In the latter example to use PowerPoint data in OOXML format, since the layout information is usually written in the <pkg:part pkg:name = "/ppt/slideLayouts ...> element or another position in the local data, controlled 21 (layout defining section 21d) refers to the information in these positions in the local data and obtains the position (coordinates) at which each object of the local data is to be written.

Then, controller 21 (layout defining section 21d) determines whether the position to be written of each object specified in the local data matches with the written position of any of objects which have already been written into the common file (whether any of objects which have already been written into the common file is located at the coordinates of each object of the local data specified in the common file in accordance with the layout information of the each object) (S303). If an object of the local data overlaps with any of the objects which have already written into the common file, controller 21 (layout defining section 21d) changes the position of the object of the local data so as not to overlap with the objects of the common file (for example, moves the object of the local data to a position downward, or the right or left of the object which has already written into the common file) (S304). The steps S302 to S304 correspond to layout determining processing which includes extracting layout information of each object from the local data, obtaining coordinates of each object, the coordinates being defined in accordance with the layout information under an assumption that the each object is written into the common file, if determining that there is another object located at the coordinates in the common file, changing the layout information such that the each object is not overlapped with the another object in the common file.

Next, controller 21 (property determining section 21b) performs processing of determining and changing properties of the local data (S305). In concrete terms, the processing includes extracting properties of objects contained in the local data, determination of the property by using the mixing ratio, determination of the property by using a change history and determination of the property by using the frequency of use. The processing further includes changing the individual properties according to a result of the determinations. The processing of determining and changing properties is the same as that of Example 1, and the description of the processing is omitted.

Next, controller 21 (data writing section 21c) writes the local data on which the processing of determining and changing properties has been performed into the common file (S306). In an example that Word data in OOXML format is created as the common file, controller 21 (data writing section 21 c) can write the local data into the common file by writing information of one or more objects, the position to write the object and the properties of the objects in XML in accordance with the rules of the hierarchy structure of Word data.

After that, controller 21 (data writing section 21c) sends the resulting common file to the controller 21 (common file managing section 21 a). The controller 21 (common file managing section 21 a) stores the received common file in storage section 25, and optionally sends data of the common file to each of terminals 10. On further receiving other local data from of terminal 10, controller 21 repeats the processing of steps S301 to S307.

As described above, the controller 21 of the processing apparatus 20 of Example 2 can write each object of the local data into the common file at a position specified by a user by analyzing local data and obtaining the positon to write of each object of the local data. Therefore, the processing apparatus 20 can create a common file reflecting users' intensions, in addition to the effects given by the processing apparatus 20 of Example 1. Further, the controller 21 of the processing apparatus 20 of Example 2 automatically changes the position to write of each object of the local data, if the each data overlaps with any of objects which have already written into the common file. Therefore, even in the situation that plural user sends respective local data to the processing apparatus 20, such control can avoid deterioration of visibility of the common file coming from overlap of objects written by the users.

Incidentally, the present invention should not be limited to the above-mentioned embodiments and examples and unless deviating from the intention of the present invention, the structure and operation of the processing apparatus 20 and the property control method may be changed appropriately.

In the above-described examples, the processing apparatus 20 controls properties of font faces, font sizes, background colors, font colors and font styles, as examples of properties of a text object. However, processing apparatus 20 may perform similar control also on at least one property among text decorations, existence of an underline, and existence of text-emphasis marks, and others.

Further, the above-described examples were given to the control of properties of text objects, but controller 21 of processing apparatus 20 can perform similar control also on shape objects and image objects. In such control, controller 21 of processing apparatus 20 may perform similar control on at least one property among sizes, fill colors, border styles, and existence of a shadow and others for shape objects, and at least one property among sizes, colors, the number of colors, and resolution and others for image objects.

Further, the above-described examples were given under the assumption that local data and a common file are Word data in OOXML format or PowerPoint data in OOXML format, but controller 21 of processing apparatus 20 can perform similar control also on data in another format. The format of local data may be different from that of the common file.

The present invention is applicable to a common-file creating system and processing apparatus which can collect local data created by plural terminals to create a common file, a property control program to be executed in the processing apparatus, a non-transitory computer-readable storage medium storing the program, and a property control method.

Although embodiments and examples of the present invention has been described and illustrated in detail, it is clearly understood that the same is by way of illustrated and example only and is not to be taken by way of limitation, the scope of the present invention being interpreted by terms of the appended claims.

## Claims

1. A property control program to be executed in a processing apparatus (20) which is communicably connected by a communication network to a plurality of terminals (10) each capable of creating local data including one or more objects, the processing apparatus (20) configured to create a common file which a plurality of pieces of local data created by the terminals (10) are to be written into, the property control program **characterized by**, when being executed by a processor (22) of the processing apparatus (20), causing the processing apparatus (20) to perform processing comprising:
in response to receiving local data from one of the terminals (10), extracting at least one property of one or more objects from the local data by analyzing the local data;
comparing each property extracted from the local data with at least one common property previously set for use in the common file;
determining the each property, including
on determining that one of the at least one property extracted from the local data is same as the at least one common property, keeping the property as it is, and
on determining that one of the at least one property extracted from the local data is different from the at least one common property, defining the property as an individual property, and determining whether to keep the individual property as it is or to change the individual property to the corresponding common property, in accordance with whether the individual property meets a predetermined criterion; and
writing each of the one or more objects contained in the local data into the common file using a property according to a result of the determining the each property.

2. The property control program of claim 1,
wherein the determining the each property further includes
calculating a mixing ratio of the individual properties, the mixing ratio being a ratio of the number of the individual properties set in the local data and the common file to the number of properties set in the common file, and
on the mixing ratio exceeding a first threshold predetermined as a value of the criterion, changing each of all the individual properties in the local data to the corresponding common property.

3. The property control program of claim 2,
wherein the determining the each property further includes,
on the mixing ratio not exceeding the first threshold, determining whether each of the individual properties has ever been changed from a default property of the local data, and
on determining that one of the individual properties has not ever been changed, changing the individual property to the corresponding common property.

4. The property control program of claim 3,
wherein the determining the each property further includes,
on determining that one of the individual properties has ever been changed, determining whether a frequency of use of the individual property which has ever been changed is not less than a second threshold predetermined as a value of the criterion, and
on determining that the frequency of use of the individual property is not less than the second threshold, changing the individual property to the corresponding common property.

5. The property control program of claim 4,
wherein the frequency of use of the individual property is a ratio of the number of characters having the individual property in the local data to the total number of characters in the local data and the common file.

6. The property control program of any one of claims 1 to 5,
wherein the determining the each property further includes,
on determining to change the individual property to the corresponding common property, creating a preview image of the local data with the individual property changed to the corresponding common property, and
sending data of the preview image to the terminal (10) which sent the local data to the processing apparatus (20).

7. The property control program of any one of claims 1 to 6,
wherein the processing further comprises determining layout information of each of the one or more objects of the local data, the determining the layout information including
extracting layout information of each of the one or more objects from the local data,
obtaining coordinates of each of the one or more objects, the coordinates being defined in accordance with the layout information under an assumption that the each of the one or more objects is written into the common file,
determining whether there is another object located at the coordinates in the common file, and
on determining that there is another object located at the coordinates in the common file, changing the layout information such that the each of the one or more objects is not overlapped with the another object in the common file, and
wherein the writing each of the one or more objects contained in the local data includes, writing the each of the one or more objects contained in the local data into the common file using the layout information changed in accordance with a result of the determining the layout information.

8. The property control program of any one of claims 1 to 7,
wherein each of the one or more objects contained in the local data has at least one property selected from a group of properties of an text object, a group of properties of a shape object, and a group of properties of an image object, where
the group of properties of an text object is composed of font faces, font sizes, background colors, font colors, font styles, text decorations, existence of an underline, and existence of text-emphasis marks,
the group of properties of an shape object is composed of sizes, fill colors, border styles, and existence of a shadow, and
the group of properties of an image object is composed of sizes, colors, the number of colors, and resolution.

9. The property control program of any one of claims 1 to 8,
wherein each of the at least one common property is a default property of the common file or a property previously set by a user for use in the common file.

10. A property control method to be used in a processing apparatus (20) which is communicably connected by a communication network to a plurality of terminals (10) each capable of creating local data including one or more objects, the processing apparatus (20) configured to create a common file which a plurality of pieces of local data created by the terminals (10) are to be written into, the property control method **characterized by** comprising:
receiving local data from one of the terminals (10);
in response to receiving the local data, extracting at least one property of one or more objects from the local data by analyzing the local data;
comparing each property extracted from the local data with at least one common property previously set for use in the common file;
determining the each property, including
on determining that one of the at least one property extracted from the local data is same as the at least one common property, keeping the property as it is, and
on determining that one of the at least one property extracted from the local data is different from the at least one common property, defining the property as an individual property, and determining whether to keep the individual property as it is or to change the individual property to the corresponding common property, in accordance with whether the individual property meets a predetermined criterion; and
writing each of the one or more objects contained in the local data into the common file using a property according to a result of the determining the each property.

11. A processing apparatus (20) which is communicably connected by a communication network to a plurality of terminals (10) each capable of creating local data including one or more objects, the processing apparatus (20) comprising:
a controller (21) configured to create a common file which a plurality of pieces of local data created by the terminals are to be written into,
the processing apparatus (20) **characterized in that** the controller (21) is configured to receive local data from one of the terminals (10),
in response to receiving the local data from the one of the terminals (10), extract at least one property of one or more objects from the local data by analyzing the local data,
compare each property extracted from the local data with at least one common property previously set for use in the common file,
determine the each property, including
on determining that one of the at least one property extracted from the local data is same as the at least one common property, keeping the property as it is, and
on determining that one of the at least one property extracted from the local data is different from the at least one common property, defining the property as an individual property, and determining whether to keep the individual property as it is or to change the individual property to the corresponding common property, in accordance with whether the individual property meets a predetermined criterion, and
write each of the one or more objects contained in the local data into the common file using a property according to a result of the determining the each property.

12. The processing apparatus (20) of claim 11,
wherein the controller (21) is further configured to determine layout information of each of the one or more objects of the local data, the determining the layout information including
extracting layout information of each of the one or more objects from the local data,
obtaining coordinates of each of the one or more objects, the coordinates being defined in accordance with the layout information under an assumption that the each of the one or more objects is written into the common file,
determining whether there is another object located at the coordinates in the common file, and
on determining that there is another object located at the coordinates in the common file, changing the layout information such that the each of the one or more objects is not overlapped with the another object in the common file, and
wherein on writing each of the one or more objects contained in the local data includes, the controller (21) is configured to write the each of the one or more objects contained in the local data into the common file using the layout information changed in accordance with a result of the determining the layout information.

13. The processing apparatus (22) of claim 11 or 12,
wherein each of the one or more objects contained in the local data has at least one property selected from a group of properties of an text object, a group of properties of a shape object, and a group of properties of an image object, where
the group of properties of an text object is composed of font faces, font sizes, background colors, font colors, font styles, text decorations, existence of an underline, and existence of text-emphasis marks,
the group of properties of an shape object is composed of sizes, fill colors, border styles, and existence of a shadow, and
the group of properties of an image object is composed of sizes, colors, the number of colors, and resolution.

14. The processing apparatus of any one of claims 11 to 13,
wherein each of the at least one common property is a default property of the common file or a property previously set by a user for use in the common file.

15. A common-file creating system **characterized by** comprising:
a plurality of terminals (10) each capable of creating local data; and
a processing apparatus (20) of any one of claims 11 to 14 which is communicably connected by a communication network to the plurality of terminals (10),
wherein the controller (21) of the processing apparatus (20) is configured to send data of the common file to at least one of the terminals (10), and
wherein each of the plurality of terminals (10) includes a display section (17) including a screen on which the local data is displayed, and a controller (11) configured to
create local data including one or more objects to send the local data to the processing apparatus (20), and
in response to receiving data of the common file from the processing apparatus (20), control the display section (17) to display on the screen the one or more objects which have been written into the common file by the processing apparatus (20).
